# FASCICULE DE BREVET EUROPEEN

(11) **EP 2 613 951 B1**
(45) Date de publication et mention de la délivrance du brevet: **15.07.2015**
(21) Numéro de dépôt: 11773059.8
(22) Date de dépôt: 09.09.2011
(51) Int. Cl.: B60J 1/12, B60J 1/14, B60J 1/16

(54) **DISPOSITIF DE VITRE DE VEHICULE**
FENSTERVORRICHTUNG FÜR EIN FAHRZEUG
VEHICLE WINDOW DEVICE

(30) Priorité: 10.09.2010 FR 1057186
(43) Date de publication de la demande: 17.07.2013
(73) Titulaire: Renault S.A.S., 92100 Boulogne-Billancourt (FR)
(72) Inventeur: SCHABANEL, Arnaud, F-78180 Montigny Le Bx (FR); MICHEL, Jean-Christophe, F-75011 Paris (FR); PHILIPPS, Mathieu, F-78280 Guyancourt (FR)
(86) Numéro de dépôt international: PCT/FR2011/052069
(87) Numéro de publication internationale: WO 2012/032277

(56) Documents cités:
- EP-A1- 2 072 735
- FR-A1- 2 791 303
- JP-A- 61 060 317
- US-A- 2 122 963

## Description

La présente invention concerne un dispositif de vitre de véhicule automobile comprenant une glace mobile. Elle concerne encore un élément de carrosserie de véhicule automobile comprenant un tel dispositif de vitre ou un véhicule automobile comprenant un tel dispositif de vitre.

Il est connu de prévoir sur les portes des véhicules automobiles des dispositifs de vitre à glace amovible de sorte à pouvoir effacer la glace lorsque l'utilisateur du véhicule automobile le souhaite. Généralement, les dispositifs de vitre comprennent une glace coulissante verticalement s'ouvrant par descente de la glace dans un caisson de porte. Cependant, ce mouvement de descente de la glace dans le caisson de porte est très intrusif du point de vue architectural. En effet, dans sa position basse, la glace pose des contraintes de conception des portes. Elle interdit, notamment de compacter la profondeur globale de la porte, ce qui est dommageable à l'habitabilité du véhicule automobile.

Pour remédier à ce problème, il existe deux solutions permettant d'éviter d'avoir une glace pénétrant de manière importante dans le caisson de porte lors de son ouverture.

La première solution consiste à utiliser une glace entrebâillante. Cependant, ce type de glace ne permet qu'une très faible ouverture, notamment une ouverture insuffisante pour le passage d'un bras d'un utilisateur du véhicule automobile.

La deuxième solution consiste à utiliser une vitre à glace coulissante en translation selon l'axe longitudinal du véhicule automobile. Une telle vitre est par exemple connue du document FR2791303 qui décrit une vitre pour véhicule automobile, comprenant un châssis de vitre, une première glace fixe, insérée dans le châssis de vitre, et une seconde glace, coulissante, également insérée dans le châssis de vitre. La seconde glace est maintenue dans une rainure de guidage supérieure et inférieure du châssis de vitre. La vitre, vue dans la direction de sa largeur, se rétrécit en coin en direction d'un côté et le châssis de vitre présente une section transversale constante et est pourvue d'au moins un moyen de guidage de la seconde glace. Cependant, un tel dispositif de vitre est difficilement intégrable au design extérieur des véhicules automobiles actuels;

Ainsi, le but de l'invention est de fournir un dispositif de vitre de véhicule automobile permettant de remédier aux problèmes évoqués précédemment et améliorant les dispositifs de vitre connus de l'art antérieur. En particulier, l'invention propose un dispositif de vitre simple, peu intrusif en ce qui concerne l'architecture de caisson de porte, compatible avec le design des véhicules actuels et présentant une position d'ouverture importante.

Le dispositif de vitre de véhicule automobile selon l'invention comprend un châssis de vitre, une glace fixe et insérée dans le châssis de vitre et une glace mobile entre une première position extrême fermée et une deuxième position extrême ouverte. La glace mobile est guidée par un organe de guidage en partie supérieure et un organe de guidage en partie inférieure et vient recouvrir au moins en partie la vitre fixe en position extrême d'ouverture. L'organe de guidage en partie inférieure est destiné à être caché à l'intérieur d'un caisson d'un élément de carrosserie.

La glace mobile peut être guidée selon un mouvement principal de translation selon une direction horizontale dans le plan du châssis de vitre.

La glace mobile peut être guidée selon un mouvement comprenant une composante de rotation.

La composante de rotation peut avoir, pour axe, un axe au moins sensiblement orthogonal au plan de châssis de vitre.

La glace mobile peut être guidée selon un mouvement comprenant une composante de translation selon un axe au moins sensiblement orthogonal au plan du châssis de vitre.

L'aire d'ouverture peut être supérieure à la moitié de l'aire totale du châssis de vitre.

La glace mobile peut être mobile entre la première position extrême dans laquelle la glace mobile et la glace fixe se recouvrent qu'au niveau d'un élément de joint assurant une étanchéité entre les deux glaces et la deuxième position extrême dans laquelle la glace mobile recouvre sensiblement l'intégralité de l'aire de la glace fixe.

L'organe de guidage en partie inférieure peut comprendre un rail solidaire du châssis et un chariot solidaire de la glace mobile.

L'invention porte aussi sur un élément de carrosserie de véhicule automobile, notamment une porte, comprenant un dispositif de vitre défini précédemment.

L'invention porte aussi sur un véhicule automobile comprenant un élément de carrosserie défini précédemment ou un dispositif de vitre défini précédemment.

Les dessins annexés représentent, à titre d'exemple, un mode de réalisation d'un dispositif de vitre selon l'invention.
La figure 1 est une vue de face d'un mode de réalisation d'un dispositif de vitre selon l'invention.
La figure 2 est une vue en coupe partielle du mode de réalisation du dispositif de vitre selon le plan A-A de la figure 1.
La figure 3 est une vue en coupe partielle du mode de réalisation du dispositif de vitre selon le plan B-B de la figure 1.
La figure 4 est une vue en coupe partielle du mode de réalisation du dispositif de vitre selon le plan C-C de la figure 1.
La figure 5 est une vue en coupe partielle du mode de réalisation du dispositif de vitre selon le plan D-D de la figure 1.
La figure 6 est une vue en coupe partielle du mode de réalisation du dispositif de vitre selon le plan E-E de la figure 1.
La figure 7 est une vue en coupe partielle du mode de réalisation du dispositif de vitre selon le plan F-F de la figure 1.
La figure 8 est une vue en coupe verticale d'une porte de véhicule automobile équipée du mode de réalisation du dispositif de vitre selon l'invention, la trace d'une glace classique coulissant verticalement étant également représenté en position haute et en position basse.

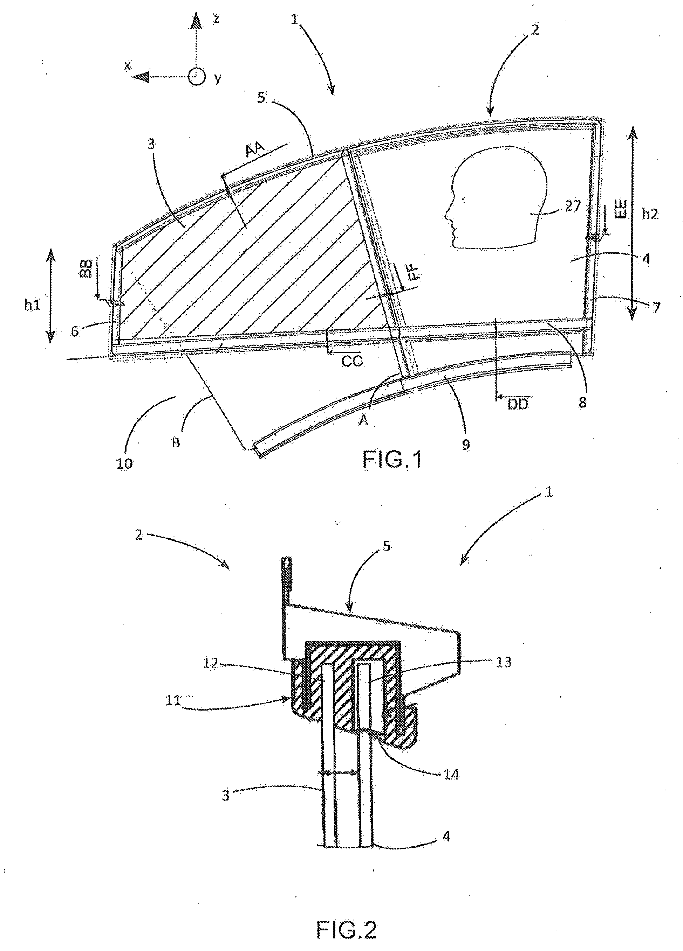

Un mode de réalisation d'une porte 1 de véhicule automobile comprenant un mode de réalisation d'un dispositif de vitre 2 selon l'invention est décrit ci-après en référence aux figures 1 à 8.

La porte 1 comprend dans sa partie inférieure un caisson 10, typiquement réalisé en tôles embouties, et, dans sa partie supérieure le dispositif de vitre 2. La porte peut être une porte avant ou une porte arrière du véhicule automobile.

Le dispositif de vitre 2 comprend principalement un châssis 5, 6, 7, 8 et une première glace 4 mobile et une deuxième glace 3 fixe. Le châssis comprend par exemple une poutre supérieure 5, une poutre inférieure 8, un montant avant 6 et un montant arrière 7. De préférence, pour une porte avant, la hauteur du montant avant h1 est sensiblement inférieure à la hauteur montant arrière h2. Par exemple, la hauteur du montant avant est sensiblement égale à la moitié de la hauteur du montant arrière, le rapport de hauteurs pouvant être supérieur à 1.5, voire supérieur à 2.

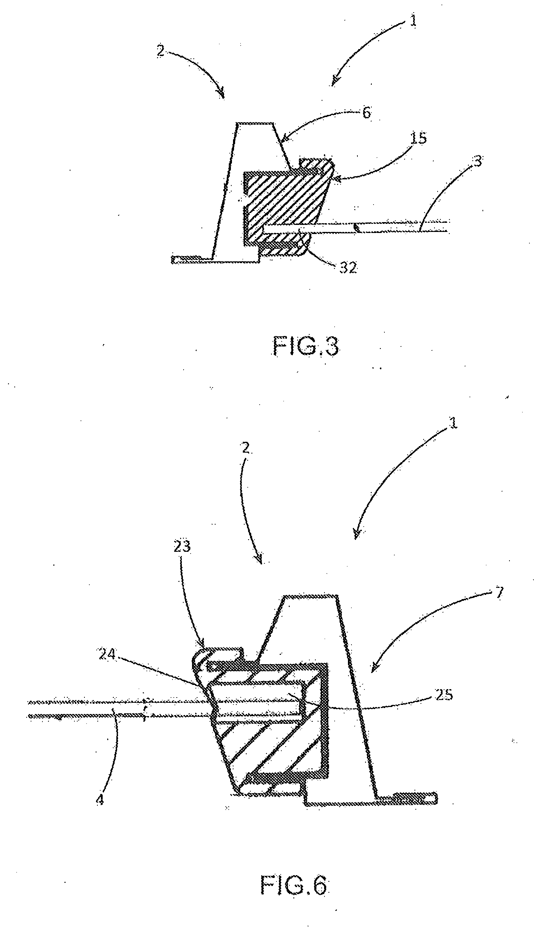

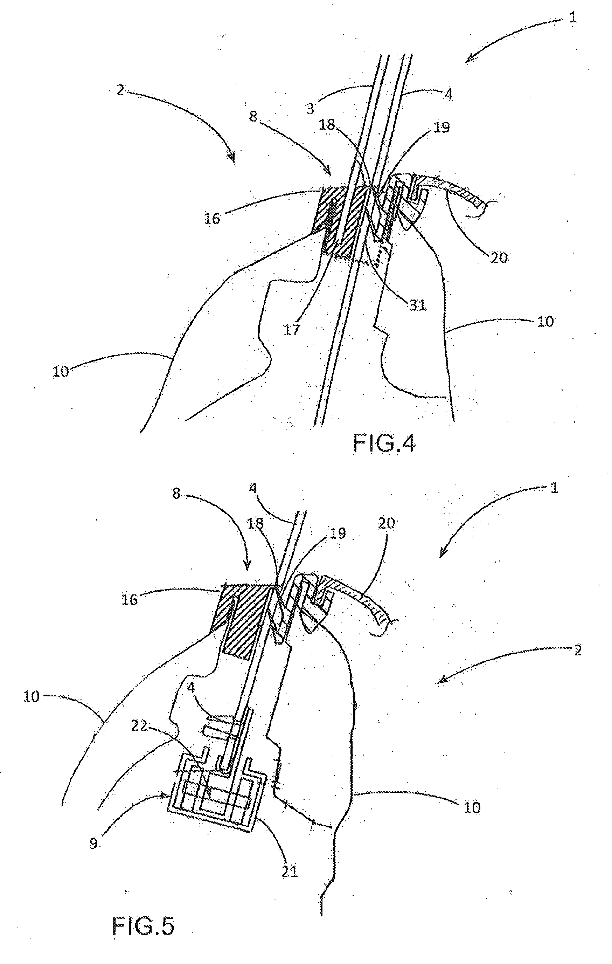

Comme représenté à la figure 2, la poutre supérieure 5 est de préférence réalisée en tôles embouties et soudées. De même, comme représenté à la figure 3, le montant avant 6 est de préférence réalisé en tôles embouties et soudées. Comme représenté à la figure 6, le montant arrière 7 est par exemple réalisé en tôles embouties et soudées. La poutre inférieure 8 est quant à elle constituée de préférence par les extrémités ou les bords supérieurs des éléments, notamment des tôles, constituant le caisson 10.

La glace fixe 3 est montée dans le châssis et est immobile relativement à celui-ci. De préférence, elle est fixée dans le châssis entre les poutres inférieure et supérieure et le montant avant. Pour ce faire, les poutres inférieures et supérieures et le montant avant comprennent respectivement des moyens 16, 11, 15 de maintien de la glace 3 et d'étanchéité du dispositif de vitre.

Par exemple, comme représenté à la figure 4, un moyen de maintien et d'étanchéité 16 est fixé sur la poutre inférieure. Il comprend un élément en matériau déformable comme du caoutchouc ou un matériau élastique synthétique similaire mis en place sur la poutre. L'élément en matériau déformable comprend par exemple une rainure 17, dans laquelle est mise en place la glace 3. De préférence, la glace 3 est pincée dans cette rainure, ce qui assure son maintien et l'étanchéité au niveau de l'interface entre la glace fixe 3 et la poutre inférieure.

Par exemple, comme représenté à la figure 2, un moyen de maintien et d'étanchéité 11 est fixé sur la poutre supérieure. Il comprend par exemple un profilé en U solidaire de la poutre supérieure. Un élément en matériau déformable comme du caoutchouc ou un matériau élastique synthétique similaire est mis en place dans ce profilé en U. L'élément en matériau déformable comprend par exemple une rainure 12, dans laquelle est mise en place la glace 3. De préférence, la glace 3 est pincée dans cette rainure, ce qui assure son maintien et l'étanchéité au niveau de l'interface entre la glace fixe 3 et la poutre supérieure.

Par exemple, comme représenté à la figure 3, un moyen de maintien et d'étanchéité 15 est fixé sur le montant avant. Il comprend par exemple un profilé en U solidaire du montant avant. Un élément en matériau déformable comme du caoutchouc ou un matériau élastique synthétique similaire est mis en place dans ce profilé en U. L'élément en matériau déformable comprend par exemple une rainure 32, dans laquelle est mise en place la glace 3. De préférence, la glace 3 est pincée dans cette rainure, ce qui assure son maintien et l'étanchéité au niveau de l'interface entre la glace fixe 3 et le montant avant.

La glace mobile 4 est elle aussi montée dans le châssis. Elle est mobile dans le châssis entre une première position extrême fermée A et une deuxième position extrême ouverte B, représentées à la figure 1. Dans la première position extrême fermée, les glaces fixe et mobile coopèrent pour obturer toute l'ouverture située dans la partie supérieure de la porte. Dans la deuxième position extrême ouverte, la glace mobile recouvre au moins partiellement la glace fixe de sorte qu'une partie importante de l'aire totale du châssis de vitre ne soit pas obturée. Cette partie peut être sensiblement supérieure à la moitié de l'aire totale du châssis de vitre.

De préférence, dans la position extrême fermée, la glace mobile ne recouvre la glace fixe qu'au niveau d'un élément de joint 26 assurant une étanchéité entre les deux glaces. De préférence, dans la position extrême ouverte, la glace mobile recouvre plus de la moitié de l'aire de la glace fixe, de préférence au moins sensiblement l'intégralité de l'aire de la glace fixe. Dans son mouvement entre les deux positions extrêmes, la glace mobile est guidée par un moyen de guidage.

Le moyen de guidage en partie inférieure comprend de préférence un organe principal de guidage 9 incluant un rail 21 et un chariot 22, le chariot 22 coulissant dans ou sur le rail. Par exemple, le chariot comprend des galets roulants dans le rail ou sur le rail. Le chariot comprend également des moyens 30 de fixation à la glace mobile. Le rail est par exemple solidaire du châssis et le chariot est par exemple solidaire de la glace mobile. Le moyen de guidage en partie inférieure est disposé dans un caisson 10 de la porte 1. Ainsi, ce moyen de guidage en partie inférieure n'est pas visible.

Le moyen de guidage peut aussi comprendre des organes auxiliaires de guidage définis dans les quatre paragraphes qui suivent.

Ainsi, le moyen de guidage peut également comprendre, au niveau de la poutre inférieure, un passage 31 ménagé entre une lèvre 18 du moyen de maintien et d'étanchéité 16 mentionné précédemment et une lèvre 19 d'une garniture d'étanchéité disposée de l'autre côté de la glace et montée sur la partie haute du caisson de porte. Cette garniture peut notamment comprendre également un moyen de fixation ou de réception d'une garniture intérieure de porte 20. Ce passage peut faire partie du moyen de guidage du fait de l'action mécanique des lèvres 18 et 19 sur la glace mobile.

Le moyen de guidage en partie supérieure peut également comprendre, au niveau de la poutre supérieure, un organe de guidage auxiliaire qui peut comprendre une rainure 13 ménagée dans le moyen de maintien et d'étanchéité 11 mentionné précédemment. La glace mobile peut coulisser avec un certain jeu dans cette rainure 13. Néanmoins, une ou plusieurs lèvres 14 d'étanchéité agissent mécaniquement sur la glace mobile de sorte à rattraper ce jeu et à assurer l'étanchéité. Un guidage de la glace mobile est ainsi également assuré.

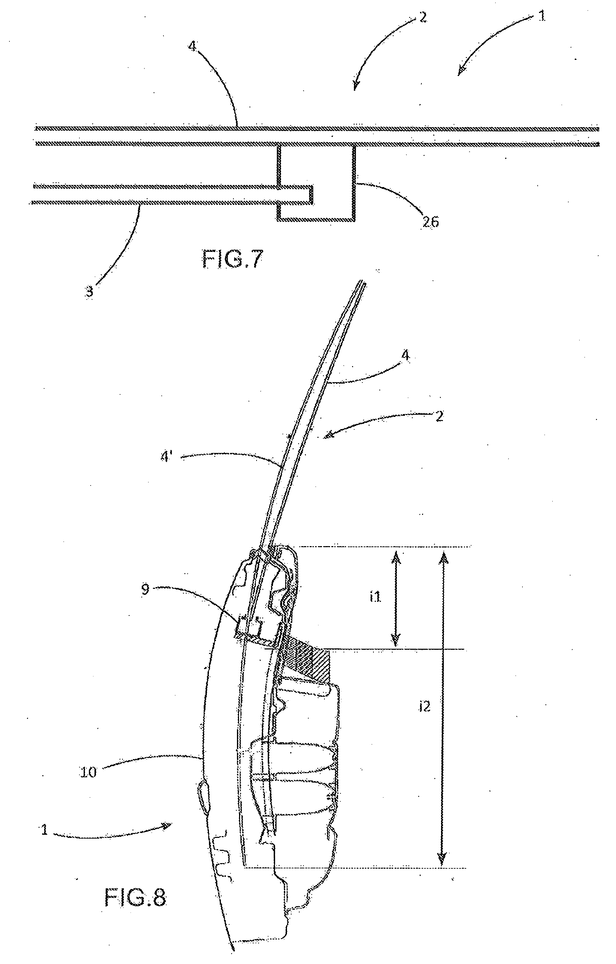

Le moyen de guidage peut également comprendre l'élément de joint 26 assurant une étanchéité entre les deux glaces. Cet élément de joint 26 est par exemple monté sur le bord de la glace fixe, comme représenté à la figure 7. Il vient en contact sur la glace mobile pour assurer l'étanchéité entre les deux glaces. Du fait de ce contact, il assure un guidage de la glace mobile. L'élément de joint peut aussi être monté sur la glace mobile.

Le moyen de guidage peut également comprendre au niveau du montant arrière 7 du châssis, comme représenté la figure 6, un moyen d'étanchéité 23 fixé sur le montant arrière. Il comprend par exemple un profilé en U solidaire du montant arrière. Un élément en matériau déformable comme du caoutchouc ou un matériau élastique synthétique similaire est mis en place dans ce profilé en U. L'élément en matériau déformable comprend une rainure 25, dans laquelle peut venir se loger la glace mobile. La glace mobile peut coulisser avec un certain jeu dans cette rainure 25. Néanmoins, une ou plusieurs lèvres 24 d'étanchéité agissent mécaniquement sur la glace mobile de sorte à rattraper ce jeu et à assurer l'étanchéité. Un guidage de la glace mobile est ainsi également assuré.

De préférence, le moyen de guidage guide la glace mobile selon un mouvement comprenant une composante de rotation. Avantageusement, la composante de rotation présente un axe au moins sensiblement orthogonal au plan de châssis de vitre. Plus généralement, la composante de rotation présente un axe au moins sensiblement perpendiculaire au dispositif de vitrage.

Le mouvement peut être un mouvement de rotation pur. Alternativement, le mouvement peut être un mouvement complexe comprenant en plus de la composante de rotation, une composante de translation sensiblement selon un axe othogonal au plan de châssis de vitre.

En outre, la composante de rotation peut présenter un rayon de rotation et/ou un axe de rotation évolutifs, c'est-à-dire évoluant au fil du déplacement de la glace mobile entre ces deux positions extrêmes. La valeur du rayon de rotation est ainsi modifiée en fonction de la position de la glace mobile et/ou la position de l'axe de rotation est modifiée en fonction de la position de la glace mobile.

Les caractéristiques du mouvement de déplacement de la glace mobile sont bien entendu définies par le moyen de guidage de la glace mobile. Dans le mode de réalisation décrit précédemment, ces caractéristiques sont déterminées par la géométrie du rail 21 et/ou par la géométrie de la poutre supérieure du châssis.

Selon un mode de réalisation de l'invention, la poutre supérieure a la forme d'un premier arc de cercle avec un premier rayon de courbure sensiblement constant sur toute la longueur de l'arc de cercle. De même, l'organe de guidage 9 a la forme d'un deuxième arc de cercle avec un deuxième rayon de courbure inférieur au premier, et sensiblement constant sur toute la longueur de l'arc de cercle. Les centres de ces deux arcs de cercle se trouvent sensiblement sur un même axe sensiblement perpendiculaire au plan du châssis de vitre. Ainsi, les bords supérieur et inférieur de la vitre mobile ont une forme adaptée pour coulisser respectivement dans l'organe de guidage supérieur, solidaire de la poutre supérieure et pour coopérer avec l'organe de guidage inférieur conférant le mouvement de rotation.

La glace mobile peut être déplacée entre ses deux positions extrêmes par tout mécanisme. Notamment, un dispositif manuel peut être utilisé vu l'effort peu important, sensiblement inférieur à 100 N, pour déplacer la vitre mobile. Il peut comprendre une manivelle de manipulation et un moyen de transmission du mouvement de la manivelle à la glace mobile. Ce moyen de transmission peut notamment comprendre une crémaillère. Alternativement, un dispositif électromécanique peut être utilisé. Il peut comprendre un moteur électrique se substituant à la manivelle de manipulation et un moyen de transmission de mouvement du moteur électrique à la glace mobile.

Grâce au dispositif de vitre selon l'invention, il est possible de mieux intégrer la fonction de vitrage dans le design extérieur du véhicule dans le cas où l'un des montants du cadre supérieur de porte a une hauteur sensiblement réduite par rapport à l'autre montant du cadre supérieur de porte. L'intégration est aussi améliorée lorsque la poutre supérieure n'est pas rectiligne, mais courbée. Dans ce cas, la coulisse supérieure de guidage nécessaire au guidage de la glace mobile est pratiquement confondue avec les lignes de style, c'est-à-dire les lignes détourant le vitrage perçu de la porte.

Grâce au dispositif de vitre selon l'invention, il est possible d'obtenir une ouverture importante du vitrage avec une intrusion très réduite de la glace mobile dans le caisson de porte. Ceci permet de réduire la distance entre la peau extérieure de la porte et le panneau intérieur d'habillage à une cote minimale et, de maximiser ainsi l'habitabilité du véhicule. En effet, comme représenté à la figure 8, l'intrusion i1 de la glace mobile selon l'invention dans le caisson de porte est limitée par rapport à l'intrusion i2 de la glace mobile connue de l'art antérieur dans le caisson de porte.

Le dispositif de vitre selon l'invention a été décrit appliqué à une porte avant de véhicule automobile, un conducteur 27 étant représenté en figure 1. Il peut cependant tout aussi bien être utilisé sur une autre porte de véhicule automobile. Plus généralement, il peut être utilisé pour tout vitrage de véhicule automobile, notamment pour réaliser un vitrage de custode. De préférence, le dispositif de vitre selon l'invention est appliqué à un véhicule automobile présentant des lignes de style arrondies ou courbées, en particulier des lignes de style supérieure arrondie ou courbée.

Dans tout ce document, le terme « au moins sensiblement » utilisé avec un *adjectif* signifie : « *adjectif* » ou « sensiblement *adjectif* », par exemple « au moins sensiblement perpendiculaire » signifie « perpendiculaire » ou « sensiblement perpendiculaire ».

## Revendications

1. Dispositif de vitre (2) d'un élément de carrosserie de véhicule automobile, comprenant un châssis de vitre (5, 6, 7, 8), une glace (3) fixe et insérée dans le châssis de vitre et une glace (4) mobile entre une première position extrême fermée (A) et une deuxième position extrême ouverte (B), guidée par un organe de guidage (13) en partie supérieure et un organe de guidage (9) en partie inférieure, et venant recouvrir au moins en partie la vitre fixe en position extrême d'ouverture,
**caractérisé en ce que** le guidage de la glace mobile comprend un composante en rotation et **en ce que** l'organe de guidage (9) en partie inférieure est disposé à l'intérieur d'un caisson (10) de l'élément (1) de carrosserie.

2. Dispositif de vitre selon la revendication 1 **caractérisé en ce que** la glace mobile est guidée selon un mouvement principal de translation selon une direction horizontale dans le plan du châssis de vitre (5, 6, 7, 8).

3. Dispositif de vitre selon l'une quelconque des revendications 1 ou 2, **caractérisé en ce que** la composante de rotation a, pour axe, un axe au moins sensiblement orthogonal au plan de châssis de vitre.

4. Dispositif de vitre selon l'une des revendications précédentes, **caractérisé en ce que** la composante de rotation comprend un rayon de rotation et/ou un axe de rotation évoluant au fil du déplacement de la glace mobile entre les deux positions extrêmes.

5. Dispositif de vitre selon l'une des revendications précédentes, **caractérisé en ce que** l'aire d'ouverture est supérieure à la moitié de l'aire totale du châssis de vitre (5, 6, 7, 8).

6. Dispositif de vitre selon l'une des revendications précédentes, **caractérisé en ce que** la glace mobile est mobile entre la première position extrême dans laquelle la glace mobile et la glace fixe se recouvrent qu'au niveau d'un élément de joint (26) assurant une étanchéité entre les deux glaces et la deuxième position extrême dans laquelle la glace mobile recouvre sensiblement l'intégralité de l'aire de la glace fixe.

7. Dispositif de vitre selon l'une des revendications précédentes, **caractérisé en ce que** l'organe de guidage (9) en partie inférieure comprend un rail (21) solidaire du châssis et un chariot (22) solidaire de la glace mobile.

8. Elément (1) de carrosserie de véhicule automobile, notamment porte, comprenant un dispositif de vitre selon l'une des revendications précédentes.

9. Véhicule automobile comprenant un élément (1) de carrosserie selon la revendication précédente ou un dispositif de vitre selon l'une des revendications 1 à 8.

## Patentansprüche

1. Scheibenvorrichtung (2) eines Kraftfahrzeug-Karosserieelements, die ein Scheibenchassis (5, 6, 7, 8), eine Glasscheibe (3), die stationär und in das Scheibenchassis eingefügt ist und eine Glasscheibe (4) umfasst, die zwischen einer ersten geschlossenen Endposition (A) und einer zweiten offenen Endposition (B), geführt von einem Führungsorgan (13) im oberen Teil und einem Führungsorgan (9) im unteren Teil beweglich ist und die stationäre Scheibe in Öffnungsendposition mindestens teilweise überdeckt,
**dadurch gekennzeichnet, dass** die Führung der beweglichen Glasscheibe eine Rotationskomponente umfasst und dass das Führungsorgan (9) im unteren Teil im Inneren eines Kastens (10) des Karosserieelements (1) angeordnet ist.

2. Scheibenvorrichtung nach Anspruch 1, **dadurch gekennzeichnet, dass** die bewegliche Glasscheibe entlang einer Hauptverschiebungsbewegung entlang einer horizontalen Richtung in der Ebene des Scheibenchassis (5, 6, 7, 8) geführt ist.

3. Scheibenvorrichtung nach einem der Ansprüche 1 oder 2, **dadurch gekennzeichnet, dass** die Rotationskomponente eine Achse zur Achse hat, die mindestens im Wesentlichen zu der Ebene des Scheibenchassis orthogonal ist.

4. Scheibenvorrichtung nach einem der vorhergehenden Ansprüche, **dadurch gekennzeichnet, dass** die Rotationskomponente einen Rotationsradius und/oder eine Rotationsachse umfasst, der/die sich im Laufe der Bewegung der beweglichen Glasscheibe zwischen den zwei Endpositionen abrollt.

5. Scheibenvorrichtung nach einem der vorhergehenden Ansprüche, **dadurch gekennzeichnet, dass** der Öffnungsbereich größer ist als die Hälfte des Gesamtbereichs des Scheibenchassis (5, 6, 7, 8).

6. Scheibenvorrichtung nach einem der vorhergehenden Ansprüche, **dadurch gekennzeichnet, dass** die bewegliche Glasscheibe zwischen der ersten Endposition, in der die bewegliche Glasscheibe und die stationäre Glasscheibe einander nur im Bereich eines Dichtelements (26) überdecken, das eine Abdichtung zwischen den zwei Glasscheiben sicherstellt, und der zweiten Endposition, in der die bewegliche Glasscheibe den Bereich der stationären Glasscheibe im Wesentlichen vollständig abdeckt, beweglich ist.

7. Scheibenvorrichtung nach einem der vorhergehenden Ansprüche, **dadurch gekennzeichnet, dass** das Führungsorgan (9) im unteren Teil eine Schiene (21) umfasst, die fest mit dem Chassis verbunden ist, und einen Wagen (22), der fest mit der beweglichen Glasscheibe verbunden ist.

8. Kraftfahrzeug-Karosserieelement (1), insbesondere eine Tür, das eine Scheibenvorrichtung nach einem der vorhergehenden Ansprüche umfasst.

9. Kraftfahrzeug, das ein Karosserieelement (1) nach dem vorhergehenden Anspruch oder eine Scheibenvorrichtung nach einem der Ansprüche 1 bis 8 umfasst.

## Claims

1. Window device (2) for a motor vehicle body element, comprising a window frame (5, 6, 7, 8), a pane (3) which is fixed and inserted into the window frame and a pane (4) which is movable between a first, closed end position (A) and a second, open end position (B), is guided by a guiding member (13) in the upper part and a guiding member (9) in the lower part, and comes to cover, at least in part, the fixed window in the open end position,
**characterized in that** the guiding of the movable pane comprises a rotational component and **in that** the guiding member (9) in the lower part is arranged inside a casing (10) of the body element (1).

2. Window device according to Claim 1, **characterized in that** the movable pane is guided along a main movement in translation along a horizontal direction in the plane of the window frame (5, 6, 7, 8).

3. Window device according to either one of Claims 1 and 2, **characterized in that** the axis of the rotational component is an axis which is at least essentially orthogonal to the plane of the window frame.

4. Window device according to one of the preceding claims, **characterized in that** the rotational component comprises a radius of rotation and/or an axis of rotation which change as the movable pane moves between the two end positions.

5. Window device according to one of the preceding claims, **characterized in that** the opening area is greater than half of the total area of the window frame (5, 6, 7, 8).

6. Window device according to one of the preceding claims, **characterized in that** the movable pane is able to move between the first end position, in which the movable pane and the fixed pane overlap only at a seal element (26) providing a seal between the two panes and the second end position in which the movable pane covers essentially all of the area of the fixed pane.

7. Window device according to one of the preceding claims, **characterized in that** the guiding member (9) comprises, in the lower part, a rail (21) which is secured to the frame and a carriage (22) which is secured to the movable pane.

8. Motor vehicle body element (1), in particular a door, comprising a window device according to one of the preceding claims.

9. Motor vehicle comprising a body element (1) according to the preceding claim, or a window device according to one of Claims 1 to 8.
